# EUROPÄISCHE PATENTANMELDUNG

(11) **EP 4 353 451 A1**
(43) Veröffentlichungstag der Anmeldung: **17.04.2024**
(21) Anmeldenummer: 23201267.4
(22) Anmeldetag: 02.10.2023
(51) Int. Cl.: B29C 64/245, B29C 64/106, B22F 12/00, B22F 12/33, B29C 64/176, B29C 64/232, B29C 64/236, B29C 64/25, B29C 64/295, B33Y 30/00, B22F 12/17, B65G 54/02

(54) **VORRICHTUNG ZUR ADDITIVEN FERTIGUNG**

(30) Priorität: 13.10.2022 EP 22201264
(71) Anmelder: SOMIC Verpackungsmaschinen GmbH & Co. KG, 83123 Amerang (DE)
(72) Erfinder: KÖGEL, Christoph, 83128 Pruttling (DE); CLASSEN, Egbert, 83137 Schonstett (DE)
(74) Vertreter: Weickmann & Weickmann PartmbB

(57) **Zusammenfassung**

Die Erfindung betrifft eine Vorrichtung (100) zur additiven Fertigung eines nicht zur Vorrichtung (100) gehörenden Bauteils (110, 120). Die Vorrichtung umfasst eine Druckkopfeinheit (102), eine Druckbetteinheit (104) und ein in Magnetschwebetechnologie ausgebildetes System (112) mit einer Statoranordnung (114) und wenigsten einem Mover (116). Erfindungsgemäß ist die Druckkopfeinheit (102) auf einer einer Druckfläche (106) zugewandten Oberfläche (104a) des wenigstens einen Movers (116) ausgebildet ist.

## Beschreibung

Die Erfindung betrifft eine Vorrichtung zur additiven Fertigung eines nicht zur Vorrichtung gehörenden Bauteils, umfassend: eine Druckkopfeinheit, die dazu eingerichtet ist, ein zur Bildung des Bauteils bestimmtes Druckmedium auf eine Druckfläche aufzutragen, eine Druckbetteinheit mit einer der Druckkopfeinheit zugewandten Fläche, auf der die Druckfläche ausgebildet ist, ein in Magnetschwebetechnologie ausgebildetes System mit einer Statoranordnung und wenigstens einem Mover, wobei die Statoranordnung eine Bewegungsfläche aufweist, relativ zu der der wenigstens eine Mover bewegbar ist. Bereits an dieser Stelle sei darauf hingewiesen, dass die Statoranordnung wenigstens eine Statoreinheit umfasst.

Eine derartige Vorrichtung zur additiven Fertigung ist aus der gattungsbildenden US 2020/0030995 A1 bekannt. Bei dieser Vorrichtung sind mehrere Mover über einen komplexen Verbindungskörper miteinander verbunden, auf dem die Druckfläche ausgebildet ist. Die Druckkopfeinheit ist entweder starr positioniert oder unter Verwendung von zusätzlichen Aktoren bewegbar. Der Verbindungskörper weist eine aufwändige Konstruktion auf, mit der die Mover verbunden werden und die Relativbewegung zwischen den Movern eingeschränkt wird, beziehungsweise diese ausgleicht. Die aus der US 2020/0030995 A1 bekannte Vorrichtung zur additiven Fertigung eines Bauteils ist daher kostenintensiv, und die synchronisierte Steuerung mehrerer Mover ist aufwändig und komplex. Aufgrund ihrer Höhe kann sich die Konstruktion verbiegen, was zu größeren Ungenauigkeiten der Positionierung der Druckfläche und/oder des zu fertigenden Bauteils führen kann als bei anderen bekannten Vorrichtungen zur additiven Fertigung.

Ferner beschreibt die US 2020/0030995 A1 eine Statoranordnung, relativ zu deren Bewegungsfläche sich mehrere Mover gleichzeitig bewegen können. Damit sich die Mover während ihres Arbeitsablaufs nicht gegenseitig behindern können ist die Bewegungsfläche in unterschiedliche Arbeitsfelder eingeteilt, wobei jedem Mover ein Arbeitsfeld zugeordnet ist. Ein Arbeitsfeld kann sich über eine Mehrzahl von Statoreinheiten erstrecken.

Aus der EP 3 290 187 A1 ist eine weitere Vorrichtung für die additive Fertigung eines Bauteils bekannt, die einen Supraleiter umfasst, der über ein, bedingt durch den Supraleiter, eingefrorenes Magnetfeld in horizontaler Richtung fest mit einem Magnetfeldgenerator gekoppelt ist. Für eine Bewegung in horizontaler Richtung sind gesonderte Mittel vorgesehen, die den Magnetfeldgenerator und damit den Supraleiter, den Druckkopf und die Druckfläche bewegen. Somit ist diese Vorrichtung aufwändig und kostenintensiv und weist ein hohes Gewicht auf.

Aufgabe der vorliegenden Erfindung ist es, eine Vorrichtung zur additiven Fertigung mit vereinfachtem Aufbau bereitzustellen.

Diese Aufgabe wird durch eine Vorrichtung der eingangs genannten Art gelöst, bei der die Druckkopfeinheit auf einer der Druckfläche zugewandten Oberfläche des wenigstens einen Movers ausgebildet ist. Dadurch, dass die Druckkopfeinheit direkt auf einer Oberfläche des wenigstens einen Movers ausgebildet ist, weist die Vorrichtung einen vereinfachten Aufbau auf. Mit anderen Worten ist die Drucckopfeinheit über der Druckfläche hängend an dem wenigstens einen Mover ausgebildet. Der wenigstens eine Mover kann sehr präzise und flexibel auf der Bewegungsfläche positioniert werden, so dass die Positionierung und Bewegung der Druckkopfeinheit relativ zu der Druckfläche verbessert und mit höherer Genauigkeit durchgeführt werden kann. Dementsprechend entfällt auch ein aufwändiges Justieren der Druckfläche und der Druckkopfeinheit relativ zu einem Vorrichtungsnullpunkt. Somit können die Durchlaufzeiten und Handlingszeiten reduziert werden. Ferner eignet sich die erfindungsgemäße Vorrichtung besonders für die Herstellung von schweren Bauteilen. Auch der Einsatz von Behältern mit Material, aus dem durch den Einsatz des Druckmediums das Bauteil hergestellt wird, ist mit der erfindungsgemäßen Vorrichtung auf einfache Weise möglich.

Die Bewegungsfläche beschränkt die Abmessungen des aufzubauenden Bauteils in einer Ebene parallel zu der Bewegungsfläche. Eine Vergrößerung der maximal möglichen Abmessungen des Bauteils in dieser Ebene kann einfach durch Erweiterung der Bewegungsfläche erreicht werden. Bei konventionellen Vorrichtungen zur additiven Fertigung geht eine Vergrößerung der maximal möglichen Bauteilabmessungen mit einer Steigerung des Biegemoments, das auf die Vorrichtung einwirkt einher. Die für die Kompensation notwenige Anpassung der Komponenten der Vorrichtung führt zu einer überproportionalen Kostensteigerungen. Bei der erfindungsgemäßen Vorrichtung kann die Stabilität der Druckfläche auf einfache Weise und damit kosteneffizient erhöht werden. Somit eignet sich die Vorrichtung auch für den Einsatz eines additiven Fertigungsverfahrens bei dem die Druckfläche ein erhöhtes Gewicht zu tragen hat, beispielsweise ein Fertigungsverfahren, bei dem das Druckmedium in einem Behälter angeordnet ist, beispielsweise pulverförmiges oder flüssiges Material oder Harz, wie Epoxidharz. Auch für die Fertigung schwerer Bauteile ist die erfindungsgemäße Vorrichtung besonders geeignet.

Im Rahmen der vorliegenden Erfindung fällt unter den Begriff "Druckmedium" jedes Medium, das dazu geeignet ist, ein Bauteil mittels additiver Fertigung zu erzeugen. So kann die Druckkopfeinheit eine Einheit sein, die dazu geeignet ist, geschmolzenes Material auf die Druckfläche aufzutragen, oder eine Einheit, die dazu geeignet ist, flüssiges Material auf die Druckfläche aufzutragen, oder eine Einheit, die dazu geeignet ist, Bindematerial auf die Druckfläche aufzutragen, oder eine Einheit, die dazu geeignet ist, Licht, beispielsweise Licht eines Lasers, auf die Druckfläche aufzutragen, oder eine Einheit ist, die dazu geeignet ist, einen Elektronenstrahl auf die Druckfläche aufzutragen oder dergleichen. Auch eine Einheit, die durch den Auftrag von Wärmestrahlung zu der Herstellung eines Bauteils führt, ähnlich einem Thermodrucker oder ähnlich zu Brandmalerei in Holz, kann eine Druckkopfeinheit sein.

Bei der Druckbetteinheit kann es sich sowohl um eine Einheit handeln, auf deren der Druckkopfeinheit zugewandten Oberfläche. Ferner ist es möglich, dass die Druckbetteinheit als Druckbettbehälter ausgeführt ist. In dem Druckbettbehälter kann ein Material angeordnet sein, in dem durch Auftragung des Druckmediums das Bauteil hergestellt wird. Insbesondere wird das Bauteil in Schichten hergestellt.

Ist die Druckbetteinheit als Druckbettbehälter ausgeführt, so kann sich die Druckfläche auch innerhalb des Druckbettbehälters angeordnet sein.

Die Anzahl der einsetzbaren Druckmedien kann erhöht werden, wenn die Drucckopfeinheit beheizbar ist. Ferner kann die Einsatzflexibilität der Vorrichtung dadurch erhöht werden, dass die Druckkopfeinheit eine Spiegelablenkeinheit umfasst.

Die Druckkopfeinheit kann einstückig mit dem wenigstens einen Mover ausgebildet sein. Alternativ kann die Druckkopfeinheit betriebsfest und lösbar mit dem wenigstens einem Mover verbunden sein, beispielsweise über eine form- und/oder kraftschlüssige Verbindung, vorzugsweise mittels einer Schraubverbindung und/oder eine Bolzenverbindung und/oder einer Rastverbindung und/oder einer Magnetverbindung. Auch eine stoffschlüssige Verbindung, beispielsweise eine Schweißverbindung und/oder eine Klebstoffverbindung und/oder eine Lötverbindung und dergleichen, kann vorgesehen sein, um die Druckkopfeinheit mit dem wenigstens einen Mover zu verbinden.

An dieser Stelle sei darauf hingewiesen, dass sich der Mover auf der Bewegungsfläche sowohl in horizontaler Richtung als auch in vertikaler Richtung bewegen kann. Mit horizontaler Richtung ist jede Richtung bezeichnet, die sich parallel zur Bewegungsfläche erstreckt, beispielsweise die Querrichtung und die Längsrichtung. Die vertikale Richtung erstreckt sich orthogonal zu der Bewegungsfläche und somit zur horizontalen Richtung. Die vertikale Richtung kann auch als Höhenrichtung bezeichnet werden. Wird das Magnetfeld der Statoreinheit entsprechend eingestellt, so kann der Mover eine relativ zu der Bewegungsfläche geneigte Position aufweisen. Beispielsweise kann ein ebener Mover an einer Stelle einen geringeren Abstand zu Bewegungsfläche in horizontale Richtung aufweisen als auf einer anderen Stelle. Ferner ist es denkbar, dass die Bewegungsfläche relativ zu der Druckbetteinheit geneigt sein kann.

Die Druckkopfeinheit kann an dem wenigstens einen Mover derart angebracht sein, dass sie in vertikaler Richtung nach unten von dem wenigsten einen Mover in Richtung der Druckfläche hervorsteht. Dies kann auch als hängende Anbringung bezeichnet werden. Hierdurch wird das Auftragen des Druckmediums durch Ausnutzung der Schwerkraft erleichtert.

Es versteht sich, dass der wenigstens eine Mover sowohl während des Fertigungsvorgangs als auch davor und danach bewegbar ist. Als Fertigungsvorgang wird dabei der Vorgang bezeichnet, bei dem Druckmedium auf die Druckfläche aufgetragen wird, um ein Bauteil additiv zu fertigen. Da ein Aufbauen eines Bauteils in Schichten kennzeichnend für additive Fertigung ist, umfasst der Begriff "auf eine Druckfläche auftragen" nicht nur das Auftragen einer ersten Materialschicht direkt auf die Druckfläche, sondern auch das Auftragen weiterer Materialschichten auf eine oder mehrere sich bereits auf der Druckfläche befindliche Materialschicht(en). Gleichermaßen kann die Vorrichtung dafür eingesetzt werden, auf ein sich bereits vor Beginn des Fertigungsvorgangs auf der Druckfläche befindliches Bauteil Druckmedium zur Fertigung einer vorbestimmten Form aufzutragen. Auch in diesem Fall trägt die Druckkopfeinheit Druckmedium auf eine Druckfläche auf, um ein Bauteil zu fertigen, nämlich auf ein sich auf der Druckfläche befindliches Halbzeug. Dies kann beispielsweise für Reparaturen oder zum Fortsetzen eines unterbrochenen Fertigungsvorgangs von Vorteil sein.

Zudem sei ferner angemerkt, dass die Vorrichtung auf ein und derselben Druckfläche auch eine Mehrzahl von Bauteilen aufbauen kann.

An dieser Stelle sei angemerkt, dass der wenigstens eine Mover eine Mehrzahl an Dauermagneten aufweisen kann, vorzugsweise vier Dauermagneten an den Ecken und einen fünften Dauermagneten im Zentrum. Demgegenüber weist die Statoranordnung Elektromagneten auf, über die die Statoranordnung ein Magnetfeld erzeugt, um die Position sowie gegebenenfalls die Bewegung des wenigstens einen Movers in horizontaler und vertikaler Richtung anzusteuern. Die Vertikalbewegung des wenigstens einen Movers wird durch die Stärke des Magnetfelds der Statoranordnung gesteuert.

Beispielsweise bei Stromausfall oder bei Ausfall eines oder mehrerer der Elektromagneten kann es vorkommen, dass sich der wenigstens eine Mover von der Bewegungsfläche löst. Um hierbei zu verhindern, dass der wenigstens eine Mover und/oder die darauf ausgebildete Druckkopfeinheit auf das Bauteil fällt und dieses und/oder sich selbst beschädigt oder zerstört, kann die Vorrichtung ferner eine Halteeinheit umfassen, die dazu eingerichtet ist, den wenigsten einen Mover an der Bewegungsfläche zu halten.

Insbesondere kann die Halteeinheit eine Saugvorrichtung umfassen, die durch ein Signal aktivierbar ist und/oder eine Selbsthaltefunktion aufweist. Die Halteeinheit kann eine konventionelle Haltevorrichtung umfassen.

In Weiterbildung der Erfindung wird vorgeschlagen, dass der wenigstens eine Mover relativ zu der Bewegungsfläche sowohl in horizontaler Richtung als auch in vertikaler Richtung bewegbar sein kann.

Der mögliche Bewegungsbereich in vertikaler Richtung von derzeit bekannten Magnetschwebetechnologiesystemen ist beschränkt. Die daraus resultierenden beschränkten Abmessungen reichen gleichwohl für bestimmte, eher flächig ausgebildete Bauteile aus. Darüber hinaus sind Systeme in der Entwicklung, die einen größeren Bewegungsbereich in Höhenrichtung des wenigstens einen Movers ermöglichen. Durch den Einsatz derartiger Systeme kann ein Bauteil mit größerer vertikaler Erstreckung gebildet werden.

Grundsätzlich ist es denkbar, dass die Druckkopfeinheit vollkommen starr ist. Aus dem Stand der Technik bekannte Druckkopfeinheiten mit mechanischer Höhenverstellung mittels Spindelantrieb weisen zwar einen großen vertikalen Druckbereich auf, aber lediglich eine geringe Genauigkeit der Höhenverstellung. Beispielsweise kann theoretisch eine Höhenverstellung mit einer Auflösung in vertikaler Richtung von 10 µm bis 20 µm eingesetzt, wobei in der Praxis realistisch aber lediglich eine Abstufung der Verstellbarkeit von etwa 50 µm verwendet wird. Die Genauigkeit der magnetischen Höhenverstellung des wenigstens einen Movers auf der Bewegungsfläche unter Verwendung von Magnetschwebetechnologie ist hingegen deutlich besser, nämlich beispielsweise in einer Größenordnung von 2 µm. Um den Druckbereich in vertikaler Richtung, und folglich auch die vertikale Erstreckung des zu fertigenden Bauteils, zu vergrößern und dabei die hohe Genauigkeit der Magnetschwebetechnologie zu nutzen, kann die Druckkopfeinheit in vertikaler Richtung relativ zu der Bewegungsfläche bewegbar sein.

Somit kann der vertikale Druckbereich und damit die vertikale Erstreckung des zu fertigenden Bauteils auf die Summe der maximalen vertikalen Bewegungsabmessung der Druckkopfeinheit und der maximalen vertikalen Bewegungsabmessung des wenigstens einen Movers erhöht werden. Gleichzeitig kann die geringe Genauigkeit der Höhenverstellung durch die hohe Genauigkeit der Magnetschwebetechnologie ausgeglichen werden.

Da die Bewegung des wenigstens einen Movers in horizontaler Richtung grundsätzlich keiner Einschränkung unterliegt, kann die Konstruktion weiter vereinfacht werden, wenn die Druckkopfeinheit relativ zu dem wenigstens einem Mover nur in vertikaler Richtung bewegbar ist. Somit werden die Wandungen des zu fertigenden Bauteils durch Bewegung des wenigstens einen Movers relativ zu der Druckfläche während des Auftragens des Druckmediums auf die Druckfläche erzeugt.

Die Druckkopfeinheit kann in einer festen Position auf dem wenigstens einen Mover angebracht sein. Hier ist die Druckkopfeinheit in keiner Richtung relativ zu dem wenigstens einen Mover beweglich. Es ist aber auch denkbar, dass die Druckkopfeinheit beweglich auf dem wenigstens einen Mover angebracht sein. So kann die Druckkopfeinheit, beispielsweise mittels eines Spindelantriebs, in vertikale Richtung relativ zu dem wenigstens einen Mover beweglich sein. Auch eine relative Bewegung der Druckkopfeinheit in horizontale Richtung relativ zu dem wenigstens einem Mover ist denkbar. Ferner kann eine Steuereinheit vorgesehen sein, die dazu eingerichtet ist, neben der Bewegung des wenigsten einen Movers in horizontaler Richtung sowohl die Bewegung des wenigstens einen Movers in vertikaler Richtung als auch die Bewegung der Druckkopfeinheit in vertikaler Richtung anzusteuern.

Mit anderen Worten kann eine Steuereinheit vorgesehen sein, die dazu eingerichtet ist, neben der Horizontalbewegung des wenigstens einen Movers sowohl die Vertikalbewegung des wenigstens einen Movers als auch die Vertikalbewegung der Druckkopfeinheit anzusteuern. Somit kann auf einfache Weise durch die Steuereinheit sichergestellt werden, dass eine gegenläufige Steuerung der Positionen von Druckkopfeinheit und Mover vermieden wird. Auch gegebenenfalls auftretende Unebenheiten der Druckfläche können durch die gemeinsame Steuereinheit von Mover und Druckkopfeinheit ausgeglichen werden.

Zudem kann auf vorteilhafter Weise die hohe Genauigkeit der Positionierung des wenigstens einen Movers, die üblicherweise in µm-Bereich liegt, in horizontaler Richtung ausgenutzt werden. Gleichzeitig führt die Kombination der geringen Genauigkeit der Höhenverstellung bei gleichzeitig einem großen Verstellbereich in vertikaler Richtung der Druckkopfeinheit mit der hohen Genauigkeit der Höhenverstellung mit lediglich einem geringen Verstellbereich in vertikaler Richtung des wenigstens einen Movers dazu, dass der Bauteilauftrag präzise und gleichzeitig effizient erfolgt. Durch einen in vertikale Richtung verstellbare Druckkopfeinheit, insbesondere durch die gemeinsame Steuerung der Bewegung in vertikale Richtung von der Druckkopfeinheit und von dem wenigstens einen Mover, kann zudem die erzielbare Bauteilhöhe verbessert werden. Ferner kann vorgesehen sein, dass auch die Bewegungsfläche in vertikale Richtung relativ zu der Druckbetteinheit bewegbar sein. So kann die erzielbare Höhe des Bauteils weiter vergrößert werden.

Die Steuereinheit kann bei der Steuerung von Mover und/oder Druckkopfeinheit deren Bewegungstrajektorien unter Berücksichtigung von Prozessen, die außerhalb der Vorrichtung durchgeführt werden, aber in die Bewegungsfläche hineinreichen, steuern. So kann die Steuereinheit beispielsweise sicherstellen, dass sich der Mover und/oder die Druckkopfeinheit so bewegen, dass eine Kollision mit einem externen Roboterarm, der eine Bewegung vertikal und/oder horizontal zwischen Bewegungsfläche und Druckbetteinheit ausführt, vermieden werden kann.

Auch kann die Steuereinheit dazu eingerichtet sein, die Bewegung der Druckkopfeinheit in horizontaler Richtung anzusteuern, sofern die Druckkopfeinheit in horizontaler Richtung bewegbar ist.

Um die Energie- und Medienzufuhr und/oder eine Datenverbindung mit der Steuereinheit zu ermöglichen, kann die Druckkopfeinheit wenigstens eine Zuführleitung für aufzutragendes Druckmedium und/oder wenigstens eine Datenleitung aufweisen, wobei die wenigstens eine Zuführleitung und/oder die wenigstens eine Datenleitung vorzugsweise durch wenigstens einen weiteren Mover geführt sein kann/können, und/oder vorzugsweise durch eine Schleppkette geführt sein kann/ können. Derartige Führungen der wenigstens einen Zuführ- und/oder Datenleitung können verhindern, dass der wenigstens eine Mover, auf dem die Druckkopfeinheit ausgebildet ist, mit einer frei hängenden Leitung kollidiert und somit die Zuführung von dem für das Auftragen vorgesehene Druckmedium zu der Druckkopfeinheit oder die Datenkommunikation mit der Druckkopfeinheit unterbricht.

Darüber hinaus können auch Leitungen, beispielsweise zur Führung von Druckluft oder Wasser oder dergleichen, oder beispielsweise zur Erzeugung eines Unterdrucks oder Vakuums, oder beispielsweise zur Absaugung von entstehenden Fluiden, auf analoge Weise vorgesehen sein.

Sind mehrere Mover vorgesehen, so kann jedem Mover ein Bereich auf der Bewegungsfläche zugeordnet sein. Um eine Kollision mit einer anderen Druckkopfeinheit zu vermeiden, ist es von Vorteil, wenn jedem Mover ein Bereich der Bewegungsfläche zugeordnet ist. Ferner kann die Zuführleitung und/oder Datenleitung des jeweiligen Movers nur innerhalb dieses Bereichs des Movers angeordnet sein.

Für die Fertigung des Bauteils kann das Druckmedium erwärmt werden und anschließend von der Druckkopfeinheit auf die Druckfläche aufgetragen werden. Um ein zu schnelles Abkühlen oder gar einen Temperaturschock des Druckmediums nach Austritt aus der Druckkopfeinheit vermeiden zu können, kann die Druckfläche erwärmbar sein. Hierzu kann die Druckfläche ein Heizelement aufweisen. Das Vorsehen einer erwärmbaren Druckfläche ist somit auf einfache Weise möglich.

Für die Einstellung der Temperatur auf einen Soll-Wert kann die Vorrichtung ferner einen Temperatursensor aufweisen. Der Temperatursensor kann mit einer Temperaturregeleinheit über eine elektronische Leitung verbunden sein. Alternativ können der Temperatursensor und die Temperaturregeleinheit auch mittels einer Funkverbindung miteinander verbunden sind. Gemäß einer weiteren Alternative kann der Temperatursensor als Infrarotkamera ausgebildet sein. Vorteilhafterweise umfasst die Steuereinheit die Temperaturregeleinheit.

Insbesondere für eine hohe Bauteilqualität ist es wichtig, dass der Bauteilfertigungsvorgang in einem Raum mit möglichst homogener Temperaturverteilung oder möglichst ohne Kaltzonen durchgeführt wird. Um eine aufwändige Klimatisierung des gesamten Bereichs, in dem die Vorrichtung aufgestellt ist, beispielsweise einer Fertigungshalle, zu vermeiden, kann ein Druckraumgehäuse vorgesehen sein, dass die Druckkopfeinheit, den wenigstens einen Mover und die Druckfläche umhüllt.

Hierdurch wird die Temperaturregelung, insbesondere die präzise Temperaturregelung, vereinfacht. Gleichzeitig kann der Energiebedarf gering gehalten werden, da das Volumen des Druckraumgehäuses kleiner ist als das Volumen des gesamten Bereichs, in dem die Vorrichtung aufgestellt ist. Ein temperaturreguliertes Druckraumgehäuse ermöglicht es zudem, das Spektrum von Druckmedien für die additive Herstellung des Bauteils zu vergrößern. Ferner können bei Einsatz bestimmter Druckmedien und Druckverfahren, beispielsweise beim Lasermetallsintern, Emissionen, zum Beispiel giftige Gase, entstehen. Das Druckraumgehäuse führt dazu, dass die beim Druckvorgang entstehenden Emissionen in dem Druckraum gehalten werden. Somit kann ein Übergreifen der entstehenden / entstandenen Emissionen in einen Bereich außerhalb des Druckraumgehäuses verhindert werden.

Ferner kann bei der erfindungsgemäßen Vorrichtung eine Mehrzahl von Drucckopfeinheiten auf dem wenigstens einem Mover ausgebildet sein. Dadurch können mehrere Bauteile gleichzeitig gedruckt werden, beispielsweise konstruktionsgleiche Bauteile, was zu einer Kapazitätserhöhung der Vorrichtung führt. Mit einem solchen Aufbau der Vorrichtung kann auch ein Bauteil an mehreren Stellen (weiter) durch jeweils eine Druckkopfeinheit aufgebaut werden, ein sogenanntes paralleles Drucken. Wird als Druckmedium Licht, insbesondere Laserlicht, eingesetzt, so können die Mehrzahl von Druckkopfeinheiten so angeordnet sein, dass sich erst durch eine Überlagerung des Lichts aus zwei oder mehr Druckkopfeinheiten ein Erzeugen des Bauteils bewirkt wird. Durch das Überlagern des Lichts kann eine ausreichend hohe Energiedichte erzeugt werden, um ein punktuelles Aushärten und damit einen schichtweisen Bauteilaufbau zu bewirken.

Auch die additive Fertigung eines Bauteils durch den Einsatz unterschiedlicher Druckmedien ist durch die geeignete Wahl von Druckkopfeinheiten und Druckmedien möglich. Hierdurch können beispielsweise mehrfarbige Bauteile oder auch Mehrkomponentenbauteile gefertigt werden. Vorteilhafterweise ist die Steuereinheit dazu eingerichtet, die Mehrzahl von Druckkopfeinheiten gemeinsam anzusteuern. So kann ein synchroner Druckprozess aber auch ein asynchroner Druckprozess ermöglicht werden. Hierdurch können beispielsweise Muster aufgetragen werden.

Alternativ oder ergänzend wird vorgeschlagen, dass die Vorrichtung mehr als einen Mover umfasst, auf dem eine Druckkopfeinheit ausgebildet ist. So kann die Kapazität der Vorrichtung weiter erhöht werden, indem beispielsweise verschiedene Druckmedien gleichzeitig aufgetragen werden können. Auch können verschiedene Druckkopfeinheiten eingesetzt werden, die jeweils für den Einsatz eines unterschiedlichen Druckverfahrens geeignet sind. So können verschiedene Druckverfahren gleichzeitig oder ohne Wechselaufwand eingesetzt werden.

Darüber hinaus kann eine Reduzierung von Stillstandzeiten, beispielsweise aufgrund eines Wechsels eines Druckmediums, einer Störung oder einer Wartung einer Druckkopfeinheit erreicht werden, da ein weiterer Mover mit einer Druckkopfeinheit zur Verfügung steht.

Vor dem Hintergrund, dass der Schwerpunkt der Erfindung der Aufbau der Vorrichtung und die Bewegung der Druckkopfeinheit ist, sei an dieser Stelle nachgetragen, dass für die Fertigung des Bauteils Standarddruckverfahren, insbesondere Filamentextrusionsverfahren oder Jettingverfahren, eingesetzt werden können. Ferner können für die Fertigung des Bauteils Sinterverfahren, Elektronenstrahlschmelzverfahren, Stereolithografie-Verfahren oder Schmelzschichtverfahren eingesetzt werden. Somit können beispielsweise alle üblichen extrudierbaren oder sprühbaren Werkstoffe, beispielsweise Kunststoffe, insbesondere thermoplastische Kunststoffe, oder Metalle für die Fertigung des Bauteils eingesetzt werden.

Die Erfindung wird im Folgenden anhand eines Ausführungsbeispiels mit Bezug auf die begleitenden Zeichnungen näher erläutert werden. Es stellt dar:
- Figur 1: eine Querschnittsansicht einer ersten Ausführungsform der erfindungsgemäßen Vorrichtung;
- Figur 2: eine perspektivische Ansicht einer zweiten Ausführungsform der erfindungsgemäßen Vorrichtung; und
- Figur 3: eine Querschnittsansicht einer dritten Ausführungsform der erfindungsgemäßen Vorrichtung.

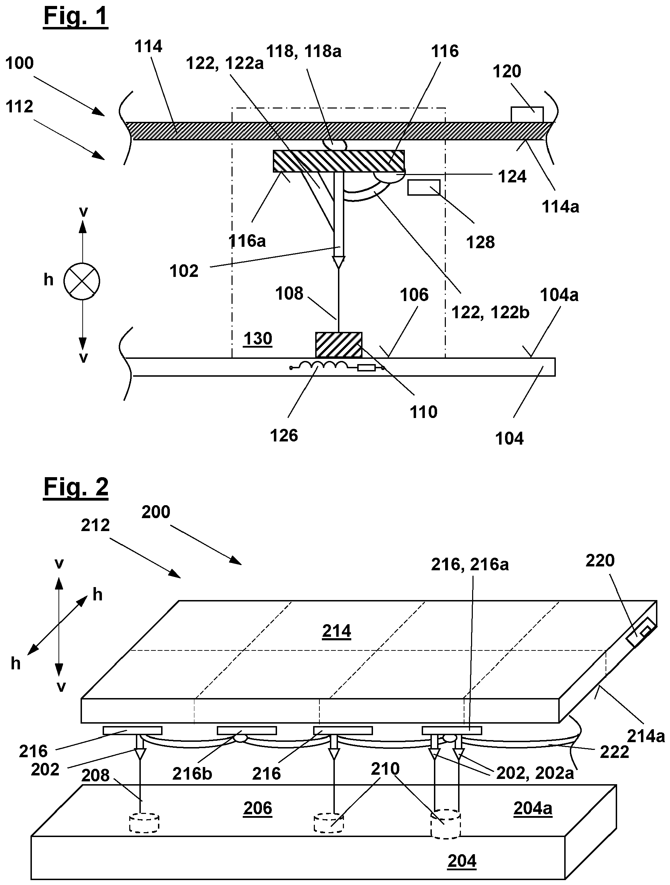

In Figur 1 ist eine Vorrichtung zur additiven Fertigung eines Bauteils ganz allgemein mit 100 bezeichnet. Die Vorrichtung 100 umfasst eine Druckkopfeinheit 102 und eine Druckbetteinheit 104.

Auf der Druckbetteinheit 104 ist an einer der Druckkopfeinheit 102 zugewandten Fläche 104a eine Druckfläche 106 ausgebildet. Die Druckkopfeinheit 102 ist dazu eingerichtet, ein Druckmedium 108 auf die Druckfläche 106 der Druckbetteinheit 104 aufzutragen, um ein nicht zur Vorrichtung 100 gehörendes Bauteil 110 zu bilden. Hierzu könnte beispielsweise ein Auftragsverfahren, beispielsweise Schmelzauftrag eingesetzt werden.

Ferner umfasst die Vorrichtung ein in Magnetschwebetechnologie ausgebildetes System 112. Das System 112 umfasst eine Statoranordnung 114 und wenigstens einen Mover 116. Die Statoranordnung 114 weist eine Bewegungsfläche 114a auf, relativ zu der sich der wenigstens eine Mover 116 bewegen kann.

Erfindungsgemäß ist die Druckkopfeinheit 102 auf einer der Druckfläche 106 zugewandten Oberfläche 116a des wenigstens einen Movers 116 ausgebildet. Gemäß dem vorliegenden Ausführungsbeispiel sind die Druckkopfeinheit 102 und der wenigstens eine Mover 116 formschlüssig oder kraftschlüssig miteinander verbunden.

Der wenigstens eine Mover 116 kann sich auf der Bewegungsfläche 114a sowohl in einer horizontalen Richtung h, parallel zu der Bewegungsfläche 114a, als auch einer vertikalen Richtung v (auch Höhenrichtung genannt), orthogonal zu der Bewegungsfläche 114a, bewegen.

Die Bewegungsfläche 114a ist in vertikaler Richtung v über der Druckbetteinheit 104, insbesondere der Druckfläche 106, angeordnet. Hierbei steht die Druckkopfeinheit 102 in vertikaler Richtung v nach unten von dem wenigstens einen Mover 116 zu der Druckfläche 106 weisend hervor. Mit anderen Worten ist die Drucckopfeinheit 102 über der Druckfläche 106 hängend an dem wenigstens einen Mover 116 ausgebildet.

Ferner umfasst die Vorrichtung 100 eine Halteeinheit 118, die dazu eingerichtet ist, den wenigstens eine Mover 116 an der Bewegungsfläche 114a der Statoranordnung 114 zu halten. Die Halteeinheit 118 ist so eingerichtet, dass sie die freie Bewegung des wenigstens einen Movers 116 sowohl in vertikaler Richtung v als auch in horizontaler Richtung h nicht behindert. Lediglich für den Fall eines unbeabsichtigten Lösens des wenigstens einen Movers 116 von der Bewegungsfläche 114a, beispielsweise aufgrund einer Störung des von der Statoranordnung 114 erzeugten Magnetfelds, bewirkt die Halteinheit 118, dass sich der wenigstens eine Mover 116 von der Bewegungsfläche 114a höchstens so weit entfernt, dass die an dem wenigstens einen Mover 116 ausgebildete Druckkopfeinheit 102 das Bauteil 110 gerade nicht berührt.

Die Halteeinheit 118 umfasst gemäß dem vorliegenden Ausführungsbeispiel eine Saugvorrichtung 118a, die durch ein Signal aktivierbar ist. Alternativ oder zusätzlich kann auch eine konventionelle Haltereinheit vorgesehen sein.

Während der wenigstens eine Mover 116 relativ zu der Bewegungsfläche 114a sowohl in horizontaler Richtung h als auch in vertikaler Richtung v bewegbar ist, kann sich im Falle des vorliegenden Ausführungsbeispiels die Druckkopfeinheit 102 nur in vertikaler Richtung v relativ zu dem wenigstens einen Mover 116 bewegen. Hierdurch kann auf vorteilhafter Weise die hohe Genauigkeit der Positionierung des wenigstens einen Movers 116 in horizontaler Richtung h ausgenutzt werden. Gleichzeitig führt die Kombination der geringen Genauigkeit der Höhenverstellung bei gleichzeitig einem großen Verstellbereich in vertikaler Richtung v der Druckkopfeinheit 102 mit der hohen Genauigkeit der Höhenverstellung mit lediglich einem geringen Verstellbereich in vertikaler Richtung v des wenigstens einen Movers 116 dazu, dass der Bauteilauftrag präzise und gleichzeitig effizient erfolgt.

Die Effizienz der additiven Fertigung wird weiter verbessert, indem eine Steuereinheit 120 vorgesehen ist, die dazu eingerichtet ist, die Bewegung des wenigstens einen Movers 116 in horizontaler Richtung h und vertikaler Richtung v zu steuern. Ferner ist die Steuereinheit 120 dazu eingerichtet, die Bewegung der Druckkopfeinheit 102 in vertikaler Richtung v anzusteuern. Diese gemeinsame Steuerung von Druckkopfeinheit 102 und des wenigstens einen Movers 116 durch die Steuereinheit 120 reduziert nicht nur den Steuerungsaufwand und die Komplexität der Vorrichtung 100, sondern verhindert eine gegenläufige Steuerung der Positionen von der Druckkopfeinheit 102 und dem wenigstens eine Mover 116. Ferner kann durch eine gemeinsame Steuerung der Bewegung in vertikale Richtung v von der Druckkopfeinheit 102 und von dem wenigstens einen Mover 116 die erzielbare Bauteilhöhe verbessert werden.

Die Komplexität des Druckvorgangs kann weiter reduziert werden, indem die Druckkopfeinheit 102 wenigstens eine Leitung 122 umfasst. Die wenigstens eine Leitung 122 kann als Zuführleitung 122a für aufzutragendes Druckmedium 108 ausgebildet sein alternativ oder zusätzlich kann wenigstens eine weitere Leitung 122 vorgesehen sein, die als Datenleitung 122b ausgebildet ist. Um zu verhindern, dass die wenigstens eine (weitere) Leitung 122 die Bewegung des wenigstens einen Movers 116 relativ zu der Bewegungsfläche 114a behindert oder erschwert, weist der wenigstens eine Mover 116 eine Führungseinheit 124 auf. Die Führungseinheit 124 ist dazu geeignet, die wenigstens eine (weitere) Leitung zu führen. Alternativ oder zusätzlich kann eine Schleppkette (nicht dargestellt) vorgesehen sein, wenigstens eine (weitere) Leitung zu führen. Hierzu kann beispielsweise auf eine Schleppkette zurückgegriffen werden, wie sie dem Fachmann bekannt ist.

Grundsätzlich ist die erfindungsgemäße Vorrichtung 100 für den Einsatz von Standarddruckverfahren geeignet. So können unter anderem Druckverfahren eingesetzt werden, bei denen es von Vorteil ist, wenn die Druckfläche 106 beheizbar ist. Hierzu ist in der Druckbetteinheit 104 ein Heizelement 126 vorgesehen.

Um die Temperaturregelung zu vereinfachen, weist die Vorrichtung 100 zudem einen Temperatursensor 128 auf. Der Temperatursensor 128 erfasst die aktuelle Temperatur an einer vorbestimmten Stelle der Vorrichtung 100. Die Steuereinheit 120 kann dazu eingerichtet sein, basierend auf dem von dem Temperatursensor 128 gemessenen Ist-Wert der Temperatur, einen Soll-Wert der Temperatur einzustellen. Hierzu kann die Steuereinheit 120 das Heizelement 126 ansteuern.

Die Temperaturregelung wird weiter dadurch vereinfacht, dass ein Druckraumgehäuse 130 vorgesehen ist, dass die Druckkopfeinheit 102, den wenigstens einen Mover 116 und die Druckfläche 106 umhüllt. Der Temperatursensor 128 ist vorzugsweise innerhalb des Druckraumgehäuses 130 angeordnet.

Um ein Bauteil 110 aufzutragen, bewegt sich der wenigstens eine Mover 116 mit der auf dem wenigstens eine Mover 116 ausgebildeten Druckkopfeinheit 102 zu einer bestimmten Position auf der Bewegungsfläche 114a, an der die Druckkopfeinheit 102, initiiert durch die Steuereinheit 120, den Druckvorgang beginnt. Mit Beginn des Druckvorgangs (additive Fertigung) fängt die Druckkopfeinheit 102 an, Druckmedium 108 auf die Druckfläche 106 der Druckbetteinheit 104 aufzutragen.

Währenddessen steuert die Steuereinheit 120 die Bewegung des wenigstens einen Movers 116 und die Bewegung der Druckeinheit 102 derart, dass die koordinierte Bewegung zusammen mit dem Auftrag des Druckmediums 108 zu der Entstehung des gewünschten Bauteils 110 auf der Druckfläche 106 führt.

Ist der Vorgang der additiven Fertigung des Bauteils 110 abgeschlossen, so kann sich der wenigstens eine Mover 116 zu einer anderen Position auf der Bewegungsfläche 114a bewegen. Die Steuereinheit 120 kann die Druckkopfeinheit 102 dazu veranlassen, mit der Fertigung eines weiteren Bauteils zu beginnen, unabhängig davon, ob das vorangehend gefertigte Bauteil 110 sich noch auf der Druckfläche 106 befindet oder nicht. Hierdurch können die Stillstandzeiten der Vorrichtung 100 reduziert werden.

Figur 2 zeigt eine Vorrichtung 200 gemäß einem zweiten Ausführungsbeispiel, die im Wesentlichen der Vorrichtung 100 gemäß dem ersten Ausführungsbeispiel entspricht. Daher sind in Figur 2 gleiche Komponenten mit den gleichen Bezugszeichen versehen wie in der Figur 1, jedoch um 100 erhöht. Darüber hinaus wird die Vorrichtung 200 nachstehend nur hinsichtlich ihrer Unterschiede zur Vorrichtung 100 beschrieben werden, auf deren Beschreibung hiermit ansonsten ausdrücklich verwiesen wird.

Die Vorrichtung 200 umfasst eine Druckfläche 206, die auf einer Fläche 204a einer Druckbetteinheit 204 ausgebildet ist. Der Druckfläche 206 weist auf eine Bewegungsfläche 214a einer Statoranordnung 214 eines in Magnetschwebetechnologie ausgebildeten Systems 212 zu. Auf der Bewegungsfläche 214a kann sich wenigstens ein Mover 216 bewegen.

Die Vorrichtung 200 umfasst eine Mehrzahl von Movern 216. Auf einem Mover 216a ist eine Mehrzahl (hier zwei) von Druckkopfeinheiten 202a angeordnet. Jede der Druckkopfeinheiten 202a des Movers 216a ist dazu eingerichtet, ein Bauteil 210 auf einer Druckfläche 206 aufzutragen. Eine Steuereinheit 220 kann jede der Druckkopfeinheiten 202a so ansteuern, dass sich zwei Druckkopfeinheiten 202a synchron oder asynchron miteinander bewegen.

Ferner weist die Vorrichtung 200 mehr als einen Mover 216 (hier zwei) auf, auf dem eine Druckkopfeinheit 202 ausgebildet ist. Die Steuereinheit 220 ist dazu eingerichtet, jeden der Mover 216 unabhängig von den weiteren auf der Bewegungsfläche 214a bewegbaren Movern 216 anzusteuern. So können auf derselben Druckfläche 206 mehrere, voneinander verschiedene Bauteile 210 aufgetragen werden.

Ein weiterer Mover 216b ist vorgesehen, um eine Leitung 222 zu führen.

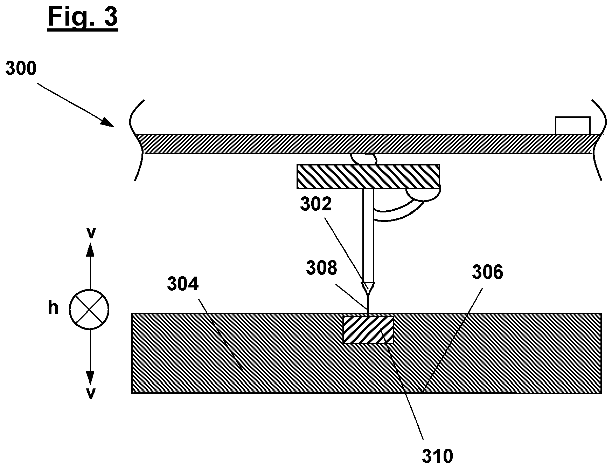

Figur 3 zeigt eine Vorrichtung 300 gemäß einem dritten Ausführungsbeispiel, die im Wesentlichen der Vorrichtung 100 gemäß dem ersten Ausführungsbeispiel und der zweiten Vorrichtung 200 gemäß dem zweiten Ausführungsbeispiel entspricht. Daher sind in Figur 3 gleiche Komponenten mit den gleichen Bezugszeichen versehen wie in den Figuren 1 und 2, jedoch um 100, respektive 200 erhöht. Darüber hinaus wird die Vorrichtung 300 nachstehend nur hinsichtlich ihrer Unterschiede zu der Vorrichtung 100 und der Vorrichtung 200 beschrieben werden, auf deren Beschreibung hiermit ansonsten ausdrücklich verwiesen wird.

Bei dem vorliegenden Ausführungsbeispiel ist die Druckbetteinheit 304 als Druckbettbehälter ausgebildet sein. Wenigstens eine Druckkopfeinheit 316 trägt Licht oder einen Elektronenstrahl als Druckmedium 308 auf eine Druckfläche 306 auf, so das ein Bauteil 310 in dem Druckbettbehälter gebildet wird.

Die Vorrichtung 300 kann für den Einsatz von selektivem Lasersintern oder Druckverfahren nach dem Stereolithografie-Prinzip eingesetzt werden.

## Patentansprüche

1. Vorrichtung (100, 200) zur additiven Fertigung eines nicht zur Vorrichtung (100, 200) gehörenden Bauteils (110, 120), umfassend:
eine Druckkopfeinheit (102, 202), die dazu eingerichtet ist, ein zur Bildung des Bauteils (110, 120) bestimmtes Druckmedium (108, 208) auf eine Druckfläche (106, 206) aufzutragen,
eine Druckbetteinheit (104, 204) mit einer der Druckkopfeinheit (102, 202) zugewandten Fläche (104a, 204a), auf der die Druckfläche (106, 206) ausgebildet ist,
ein in Magnetschwebetechnologie ausgebildetes System (112, 212) mit einer Statoranordnung (114, 214) und wenigsten einem Mover (116, 216), wobei die Statoranordnung (114,214) eine Bewegungsfläche (114a, 214a) aufweist, relativ zu der der wenigstens eine Mover (116, 216) bewegbar ist,
**dadurch gekennzeichnet, dass** die Druckkopfeinheit (102, 202) auf einer der Druckfläche (106, 206) zugewandten Oberfläche (104a, 204a) des wenigstens einen Movers (116, 216) ausgebildet ist.

2. Vorrichtung nach Anspruch 1,
**dadurch gekennzeichnet, dass** die Vorrichtung (100) ferner eine Halteeinheit (118) umfasst, die dazu eingerichtet ist, den wenigsten einen Mover (116) an der Bewegungsfläche (114a) zu halten.

3. Vorrichtung nach Anspruch 2,
**dadurch gekennzeichnet, dass** die Halteeinheit (118) eine Saugvorrichtung (118a) umfasst, die durch ein Signal aktivierbar ist und/oder eine Selbsthaltefunktion aufweist.

4. Vorrichtung nach einem der vorangehenden Ansprüche,
**dadurch gekennzeichnet, dass** der wenigstens eine Mover (116) relativ zu der Bewegungsfläche (114a) sowohl in horizontaler Richtung (h) als auch in vertikaler Richtung (v) bewegbar ist.

5. Vorrichtung nach einem der vorangehenden Ansprüche,
**dadurch gekennzeichnet, dass** die Druckkopfeinheit (102) in vertikaler Richtung (v) relativ zu der Bewegungsfläche (114a) bewegbar ist.

6. Vorrichtung nach einem der vorangehenden Ansprüche,
**dadurch gekennzeichnet, dass** die Druckkopfeinheit (102) relativ zu dem wenigstens einen Mover (116) nur in vertikaler Richtung (v) bewegbar ist.

7. Vorrichtung nach einem der Ansprüche 5 oder 6,
**dadurch gekennzeichnet, dass** eine Steuereinheit (120) vorgesehen ist, die dazu eingerichtet ist, neben der Bewegung des wenigsten einen Movers (116) in horizontaler Richtung (h) sowohl die Bewegung des wenigstens einen Movers (116) in vertikaler Richtung (v) als auch die Bewegung der Druckkopfeinheit (102) in vertikaler Richtung (v) anzusteuern.

8. Vorrichtung nach einem der vorangehenden Ansprüche,
**dadurch gekennzeichnet, dass** die Druckkopfeinheit (102) wenigstens einer Zuführleitung (122a) für aufzutragendes Druckmedium (108) und /oder wenigstens einer Datenleitung (122b) aufweist, wobei die wenigstens eine Zuführleitung (122a) und/oder die wenigstens eine Datenleitung (122b) vorzugsweise durch wenigstens einen weiteren Mover (116) geführt ist/sind und/oder vorzugsweise durch eine Schleppkette geführt ist/sind.

9. Vorrichtung nach einem der vorangehenden Ansprüche,
**dadurch gekennzeichnet, dass** die Vorrichtung (100) ferner einen Temperatursensor (128) aufweist.

10. Vorrichtung nach einem der vorangehenden Ansprüche,
**dadurch gekennzeichnet, dass** ein Druckraumgehäuse (130) vorgesehen ist, das die Druckkopfeinheit (102), den wenigstens einen Mover (116) und die Druckfläche (106) umhüllt.

11. Vorrichtung nach einem der vorangehenden Ansprüche,
**dadurch gekennzeichnet, dass** eine Mehrzahl von Druckkopfeinheiten (202a) auf dem wenigstens einem Mover (216a) ausgebildet ist.

12. Vorrichtung nach einem der vorangehenden Ansprüche,
**dadurch gekennzeichnet, dass** die Vorrichtung (200) mehr als einen Mover (216) umfasst, auf dem eine Druckkopfeinheit (202, 202a) ausgebildet ist.
